# EUROPEAN PATENT APPLICATION

(11) **EP 4 510 634 A1**
(43) Date of publication of application: **19.02.2025**
(21) Application number: 23794900.3
(22) Date of filing: 27.03.2023
(51) Int. Cl.: H04W 4/02

(54) **DISTANCE DETERMINATION METHOD AND COMMUNICATION APPARATUS**

(30) Priority: 24.04.2022 CN 202210454825
(71) Applicant: Huawei Technologies Co., Ltd., Shenzhen, Guangdong 518129 (CN)
(72) Inventor: ZHOU, Yue, Shenzhen, Guangdong 518129 (CN); CHEN, Ying, Shenzhen, Guangdong 518129 (CN); QIAO, Yunfei, Shenzhen, Guangdong 518129 (CN)
(74) Representative: Goddar, Heinz J.
(86) International application number: PCT/CN2023/084012
(87) International publication number: WO 2023/207465

(57) **Abstract**

Disclosed is a distance determining method, including: A terminal device (110, 111) receives first ephemeris information, where the first ephemeris information is associated with a location of a network device (120, 121, 122) in a first earth centered inertial ECI coordinate system at first time, and there is a first relationship between the first ECI coordinate system and an earth centered earth fixed ECEF coordinate system at the first time. The terminal device (110, 111) determines a distance between the terminal device (110, 111) and the network device (120, 121, 122) based on the first ephemeris information and the first relationship. A communication apparatus, a computer-readable storage medium, a computer program product, and a communication system are further disclosed. In this way, an error can be reduced when the terminal device determines the distance between the terminal device and the network device.

## Description

This application claims priority to Chinese Patent Application No. 202210454825.5, filed with the China National Intellectual Property Administration on April 24, 2022 and entitled "DISTANCE DETERMINING METHOD AND COMMUNICATION APPARATUS", which is incorporated herein by reference in its entirety.

### TECHNICAL FIELD

Embodiments of this application relate to the communication field, and more specifically, to a distance determining method and a communication apparatus.

### BACKGROUND

With development of information technologies, a non-terrestrial network (non-terrestrial network, NTN) is introduced into a 5^{th} generation (5^{th} generation, 5G) system, and the non-terrestrial network and the 5^{th} generation (5^{th} generation, 5G) system jointly form a global integrated comprehensive communication network that provides sea-land-space-air-ground seamless coverage, to meet more service requirements.

An NTN communication system includes a satellite communication system. In the satellite communication system, high-speed movement of a satellite causes a frequency offset to communication between a terminal device and the satellite, and a long distance between the satellite and the terminal device causes a high delay to the communication between the terminal device and the satellite, leading to a time offset. Therefore, in the satellite communication system, to complete time/frequency synchronization with a network, the terminal device needs to obtain the frequency offset (Doppler offset) and the time offset. In this case, the terminal device needs to calculate a relative distance and a relative speed between the terminal device and the satellite, to obtain the frequency offset and the time offset. The relative distance and the relative speed may be calculated by the terminal device based on a location of the terminal device and a location of the satellite, and the terminal device may determine the location of the terminal device. Therefore, how the terminal device determines the location of the satellite, to determine the distance between the terminal device and the satellite is a problem worth considering.

### SUMMARY

Embodiments of this application provide a distance determining method and a communication apparatus, so that an error is reduced when a terminal device determines a distance between the terminal device and a network device.

According to a first aspect, a distance determining method is provided. The method may be performed by a terminal device, or may be performed by a component (such as a chip or a chip system) configured in the terminal device. This is not limited in this application. The method includes: The terminal device receives first ephemeris information, where the first ephemeris information is associated with a location of a network device in a first earth centered inertial ECI coordinate system at first time, and there is a first relationship between the first ECI coordinate system and an earth centered earth fixed ECEF coordinate system at the first time. The terminal device determines a distance between the terminal device and the network device based on the first ephemeris information and the first relationship.

Based on the foregoing solution, the terminal device may determine location information of the network device in the first ECI coordinate system at the first time based on the first ephemeris information, and determine the distance between the terminal device and the network device based on the first relationship between the first ECI coordinate system and the ECEF coordinate system. For example, the first ephemeris information includes ECI coordinate information. The terminal device may convert the ECI coordinate information in the first ephemeris information into ECEF coordinate information at the first time based on the first relationship, and the terminal device may obtain ECEF coordinate information that corresponds to a location of the terminal device and that is at the first time, to determine the distance between the terminal device and the network device. In a solution, the terminal device needs to convert, based on absolute time corresponding to ephemeris information, ECI coordinate information into ECEF coordinate information at the absolute time, and there is an error when the absolute time corresponding to the ephemeris information is obtained. By contrast, in this solution, there is no need to obtain the absolute time during coordinate information conversion. Therefore, coordinate information conversion can be performed more accurately, and an error of the distance that is between the terminal device and the network device and that is determined by the terminal device can be reduced.

With reference to the first aspect, in some implementations of the first aspect, the terminal device sends first request information, where the first request information is for requesting the first ephemeris information.

Based on the foregoing solution, the peer end delivers the first ephemeris information only when the terminal device requests the first ephemeris information. This can reduce signaling overheads, and meet a requirement of the terminal device as required.

With reference to the first aspect, in some implementations of the first aspect, the terminal device receives first indication information, where the first indication information indicates that the first ephemeris information is response information of the first request information.

Based on the foregoing solution, the terminal device can determine a type of the response information (namely, the first ephemeris information), to avoid unnecessary signaling overheads caused by incorrect interpretation of the ephemeris information (the ephemeris information associated with first ECI coordinates) on which coordinate conversion has been performed.

With reference to the first aspect, in some implementations of the first aspect, the first relationship includes a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

With reference to the first aspect, in some implementations of the first aspect, the terminal device receives second indication information, where the second indication information indicates the first relationship.

Based on the foregoing solution, values of the first angle, the second angle, and the third angle may be changed, and can be flexibly implemented.

With reference to the first aspect, in some implementations of the first aspect, the first indication information and/or the second indication information are/is carried in radio resource control signaling, media access control control element signaling, or downlink control information.

With reference to the first aspect, in some implementations of the first aspect, the first angle is 0 degrees, the second angle is 0 degrees, and the third angle is 0 degrees.

Based on the foregoing solution, the values of the first angle, the second angle, and the third angle are 0. In this case, the terminal device may not need to rotate a coordinate axis when performing coordinate information conversion, and conversion is easy to implement.

With reference to the first aspect, in some implementations of the first aspect, the first request information is carried in radio resource control signaling, media access control control element signaling, or uplink control information.

According to a second aspect, a distance determining method is provided. The method may be performed by a terminal device, or may be performed by a component (such as a chip or a chip system) configured in the terminal device. This is not limited in this application. The method includes: The terminal device receives second ephemeris information, where the second ephemeris information is associated with a location of a network device in a second earth centered inertial ECI coordinate system at first time. The terminal device receives third indication information, where the third indication information indicates a second relationship between the second ECI coordinate system and an earth centered earth fixed ECEF coordinate system at the first time. The terminal device determines a distance between the terminal device and the network device based on the second ephemeris information and the second relationship.

Based on the foregoing solution, the terminal device may determine location information of the network device in the second ECI coordinate system at the first time based on the second ephemeris information, and determine the distance between the terminal device and the network device based on the second relationship between the second ECI coordinate system and the ECEF coordinate system. For example, the second ephemeris information includes ECI coordinate information. The terminal device may convert the ECI coordinate information included in the second ephemeris information into ECEF coordinate information at the first time based on the second relationship, and the terminal device may obtain ECEF coordinate information that corresponds to a location of the terminal device and that is at the first time, to determine the distance between the terminal device and the network device. In a solution, the terminal device needs to convert, based on absolute time corresponding to ephemeris information, ECI coordinate information into ECEF coordinate information at the absolute time, and there is an error when the absolute time corresponding to the ephemeris information is obtained. By contrast, in this solution, there is no need to obtain the absolute time during coordinate information conversion. Therefore, coordinate information conversion can be performed more accurately, and an error of the distance that is between the terminal device and the network device and that is determined by the terminal device can be reduced. In addition, compared with the solution provided in the first aspect, in this solution, the second ephemeris information may not need to be carried in response information of a request from the terminal device, so that overheads of terminal device-specific signaling and overall signaling of a communication system can be reduced.

With reference to the second aspect, in some implementations of the second aspect, the second relationship includes a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

With reference to the second aspect, in some implementations of the second aspect, the terminal device sends first request information, where the first request information is for requesting first ephemeris information, the first ephemeris information is associated with a location of the network device in a first ECI coordinate system at the first time, and there is a first relationship between the first ECI coordinate system and the ECEF coordinate system at the first time.

Based on the foregoing solution, when the terminal device does not know whether the second ephemeris information is valid, the terminal device may send the first request information, and the peer end may determine to deliver the third indication information or the first ephemeris information.

With reference to the second aspect, in some implementations of the second aspect, the terminal device sends second request information, where the second request information is for requesting the second relationship.

Based on the foregoing solution, when the terminal device knows that the second ephemeris information is valid, the terminal device may request the second relationship. This can also reduce signaling overheads.

With reference to the second aspect, in some implementations of the second aspect, the terminal device receives fourth indication information, where the fourth indication information indicates that the third indication information is response information of the first request information.

Based on the foregoing solution, the terminal device can determine a type of the response information (namely, the third indication information), to ensure correct interpretation of the second ephemeris information and avoid unnecessary signaling overheads.

With reference to the second aspect, in some implementations of the second aspect, the terminal device receives fourth indication information, where the fourth indication information indicates that the third indication information is response information of the second request information.

Based on the foregoing solution, the terminal device can determine a type of the response information (namely, the third indication information), to ensure correct interpretation of the second ephemeris information and avoid unnecessary signaling overheads.

With reference to the second aspect, in some implementations of the second aspect, the second request information is carried in radio resource control signaling, a media access control control element, or uplink control information.

According to a third aspect, a distance determining method is provided. The method may be performed by a network device, or may be performed by a component (such as a chip or a chip system) configured in the network device. This is not limited in this application. The method includes: The network device sends first ephemeris information, where the first ephemeris information is associated with a location of the network device in a first earth centered inertial ECI coordinate system at first time, and there is a first relationship between the first ECI coordinate system and an earth centered earth fixed ECEF coordinate system at the first time.

Based on the foregoing solution, the network device may indicate location information of the network device in the first ECI coordinate system at the first time based on the first ephemeris information, so that a peer end may determine a distance between the terminal device and the network device based on the first relationship between the first ECI coordinate system and the ECEF coordinate system. For example, the first ephemeris information includes ECI coordinate information. The peer end may convert the ECI coordinate information in the first ephemeris information into ECEF coordinate information at the first time based on the first relationship, and the peer end may obtain ECEF coordinate information that corresponds to a location of the peer end and that is at the first time, to determine the distance between the peer end and the network device. In a solution, the peer end needs to convert, based on absolute time corresponding to ephemeris information, ECI coordinate information into ECEF coordinate information at the absolute time, and there is an error when the absolute time corresponding to the ephemeris information is obtained. By contrast, in this solution, there is no need to obtain the absolute time during coordinate information conversion. Therefore, coordinate information conversion can be performed more accurately, and an error of the distance that is between the peer end and the network device and that is determined by the peer end can be reduced.

With reference to the third aspect, in some implementations of the third aspect, the network device receives first request information, where the first request information is for requesting the first ephemeris information.

Based on the foregoing solution, the network device delivers the first ephemeris information only when receiving the first request information. This can reduce signaling overheads, and meet a requirement of the peer end as required.

With reference to the third aspect, in some implementations of the third aspect, the network device sends first indication information, where the first indication information indicates that the first ephemeris information is response information of the first request information.

Based on the foregoing solution, the peer end can determine a type of the response information (namely, the first ephemeris information), to avoid unnecessary signaling overheads caused by incorrect interpretation of ephemeris information (ephemeris information associated with first ECI coordinates) on which coordinate conversion has been performed.

With reference to the third aspect, in some implementations of the third aspect, the first relationship includes a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

With reference to the third aspect, in some implementations of the third aspect, the network device sends second indication information, where the second indication information indicates the first relationship.

Based on the foregoing solution, values of the first angle, the second angle, and the third angle may be changed, and can be flexibly implemented.

With reference to the third aspect, in some implementations of the third aspect, the first indication information and/or the second indication information are/is carried in radio resource control signaling, media access control control element signaling, or downlink control information.

With reference to the third aspect, in some implementations of the third aspect, the first angle is 0 degrees, the second angle is 0 degrees, and the third angle is 0 degrees.

Based on the foregoing solution, the values of the first angle, the second angle, and the third angle are 0. In this case, the peer end may not need to rotate a coordinate axis when performing coordinate information conversion, and conversion is easy to implement.

With reference to the third aspect, in some implementations of the third aspect, the first request information is carried in radio resource control signaling, a media access control control element, or uplink control information.

According to a fourth aspect, a distance determining method is provided. The method may be performed by a network device, or may be performed by a component (such as a chip or a chip system) configured in the network device. This is not limited in this application. The method includes: The network device sends second ephemeris information, where the second ephemeris information is associated with a location of the network device in a second earth centered inertial ECI coordinate system at first time. The network device sends third indication information, where the third indication information indicates a second relationship between the second ECI coordinate system and an earth centered earth fixed ECEF coordinate system at the first time.

Based on the foregoing solution, the network device may indicate location information of the network device in the second ECI coordinate system at the first time based on the second ephemeris information, so that a peer end may determine a distance between the terminal device and the network device based on the second relationship between the second ECI coordinate system and the ECEF coordinate system. For example, the second ephemeris information includes ECI coordinate information. The peer end may convert the ECI coordinate information in the second ephemeris information into ECEF coordinate information at the first time based on the second relationship, and the peer end may obtain ECEF coordinate information that corresponds to a location of the peer end and that is at the first time, to determine the distance between the peer end and the network device. In a solution, the peer end needs to convert, based on absolute time corresponding to ephemeris information, ECI coordinate information into ECEF coordinate information at the absolute time, and there is an error when the absolute time corresponding to the ephemeris information is obtained. By contrast, in this solution, there is no need to obtain the absolute time during coordinate information conversion. Therefore, coordinate information conversion can be performed more accurately, and an error of the distance that is between the peer end and the network device and that is determined by the peer end can be reduced. In addition, compared with the solution provided in the first aspect, in this solution, the second ephemeris information may not need to be carried in response information of a request from the terminal device, so that overheads of terminal-specific signaling and overall signaling of a communication system can be reduced.

With reference to the fourth aspect, in some implementations of the fourth aspect, the second relationship includes a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

With reference to the fourth aspect, in some implementations of the fourth aspect, the network device receives first request information, where the first request information is for requesting first ephemeris information, the first ephemeris information is associated with a location of the network device in a first ECI coordinate system at the first time, and there is a first relationship between the first ECI coordinate system and the ECEF coordinate system at the first time. The network device determines that the second ephemeris information is valid.

Based on the foregoing solution, when the requestor does not know whether the second ephemeris information is valid, the requestor may send the first request information, and the network device may determine, based on validity of the second ephemeris information, to deliver the third indication information or the first ephemeris information.

With reference to the fourth aspect, in some implementations of the fourth aspect, the network device receives second request information, where the second request information is for requesting the second relationship.

Based on the foregoing solution, when the requestor knows that the second ephemeris information is valid, the requestor may directly request the second relationship from the network device. This can also reduce signaling overheads.

With reference to the fourth aspect, in some implementations of the fourth aspect, the network device sends fourth indication information, where the fourth indication information indicates that the third indication information is response information of the first request information.

Based on the foregoing solution, the peer end can determine a type of the response information (namely, the third indication information), to ensure correct interpretation of the second ephemeris information and avoid unnecessary signaling overheads.

With reference to the fourth aspect, in some implementations of the fourth aspect, the network device sends fourth indication information, where the fourth indication information indicates that the third indication information is response information of the second request information.

Based on the foregoing solution, the peer end can determine a type of the response information (namely, the third indication information), to ensure correct interpretation of the second ephemeris information and avoid unnecessary signaling overheads.

With reference to the fourth aspect, in some implementations of the fourth aspect, the second request information is carried in radio resource control signaling, a media access control control element, or uplink control information.

According to a fifth aspect, a communication apparatus is provided. The apparatus may be a terminal device, or may be a component (such as a chip or a chip system) configured in the terminal device. This is not limited in this application. The apparatus includes: a transceiver unit and a processing unit. The transceiver unit is configured to receive first ephemeris information, where the first ephemeris information is associated with a location of a network device in a first earth centered inertial ECI coordinate system at first time, and there is a first relationship between the first ECI coordinate system and an earth centered earth fixed ECEF coordinate system at the first time. The processing unit is configured to determine a distance between the terminal device and the network device based on the first ephemeris information and the first relationship.

With reference to the fifth aspect, in some implementations of the fifth aspect, the transceiver unit is further configured to send first request information, where the first request information is for requesting the first ephemeris information.

With reference to the fifth aspect, in some implementations of the fifth aspect, the transceiver unit is further configured to receive first indication information, where the first indication information indicates that the first ephemeris information is response information of the first request information.

With reference to the fifth aspect, in some implementations of the fifth aspect, the first relationship includes a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

With reference to the fifth aspect, in some implementations of the fifth aspect, the transceiver unit is further configured to receive second indication information, where the second indication information indicates the first relationship.

With reference to the fifth aspect, in some implementations of the fifth aspect, the first indication information and/or the second indication information are/is carried in radio resource control signaling, media access control control element signaling, or downlink control information.

With reference to the fifth aspect, in some implementations of the fifth aspect, the first angle is 0 degrees, the second angle is 0 degrees, and the third angle is 0 degrees.

With reference to the fifth aspect, in some implementations of the fifth aspect, the first request information is carried in radio resource control signaling, media access control control element signaling, or uplink control information.

According to a sixth aspect, a communication apparatus is provided. The apparatus may be a terminal device, or may be a component (such as a chip or a chip system) configured in the terminal device. This is not limited in this application. The apparatus includes a transceiver unit. The transceiver unit is configured to receive second ephemeris information, where the second ephemeris information is associated with a location of a network device in a second earth centered inertial ECI coordinate system at first time. The transceiver unit is further configured to receive third indication information, where the third indication information indicates a second relationship between the second ECI coordinate system and an earth centered earth fixed ECEF coordinate system at the first time. The processing unit is configured to determine a distance between the terminal device and the network device based on the second ephemeris information and the second relationship.

With reference to the sixth aspect, in some implementations of the sixth aspect, the second relationship includes a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

With reference to the sixth aspect, in some implementations of the sixth aspect, the transceiver unit is further configured to send first request information, where the first request information is for requesting first ephemeris information, the first ephemeris information is associated with a location of the network device in a first ECI coordinate system at the first time, and there is a first relationship between the first ECI coordinate system and the ECEF coordinate system at the first time.

With reference to the sixth aspect, in some implementations of the sixth aspect, the transceiver unit is further configured to send second request information, where the second request information is for requesting the second relationship.

With reference to the sixth aspect, in some implementations of the sixth aspect, the transceiver unit is further configured to receive fourth indication information, where the fourth indication information indicates that the third indication information is response information of the first request information.

With reference to the sixth aspect, in some implementations of the sixth aspect, the transceiver unit is further configured to receive fourth indication information, where the fourth indication information indicates that the third indication information is response information of the second request information.

With reference to the sixth aspect, in some implementations of the sixth aspect, the second request information is carried in radio resource control signaling, a media access control control element, or uplink control information.

According to a seventh aspect, a communication apparatus is provided. The apparatus may be a network device, or may be a component (such as a chip or a chip system) configured in the network device. This is not limited in this application. The apparatus includes a transceiver unit. The transceiver unit is configured to send first ephemeris information, where the first ephemeris information is associated with a location of a network device in a first earth centered inertial ECI coordinate system at first time, and there is a first relationship between the first ECI coordinate system and an earth centered earth fixed ECEF coordinate system at the first time.

With reference to the seventh aspect, in some implementations of the seventh aspect, the transceiver unit is further configured to receive first request information, where the first request information is for requesting the first ephemeris information.

With reference to the seventh aspect, in some implementations of the seventh aspect, the transceiver unit is further configured to send first indication information, where the first indication information indicates that the first ephemeris information is response information of the first request information.

With reference to the seventh aspect, in some implementations of the seventh aspect, the first relationship includes a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

With reference to the seventh aspect, in some implementations of the seventh aspect, the transceiver unit is further configured to send second indication information, where the second indication information indicates the first relationship.

With reference to the seventh aspect, in some implementations of the seventh aspect, the first indication information and/or the second indication information are/is carried in radio resource control signaling, media access control control element signaling, or downlink control information.

With reference to the seventh aspect, in some implementations of the seventh aspect, the first angle is 0 degrees, the second angle is 0 degrees, and the third angle is 0 degrees.

With reference to the seventh aspect, in some implementations of the seventh aspect, the first request information is carried in radio resource control signaling, a media access control control element, or uplink control information.

According to an eighth aspect, a communication apparatus is provided. The apparatus may be a network device, or may be a component (such as a chip or a chip system) configured in the network device. This is not limited in this application. The apparatus includes a processing unit and a transceiver unit. The transceiver unit is configured to send second ephemeris information, where the second ephemeris information is associated with a location of the network device in a second earth centered inertial ECI coordinate system at first time. The transceiver unit is further configured to send third indication information, where the third indication information indicates a second relationship between the second ECI coordinate system and an earth centered earth fixed ECEF coordinate system at the first time.

With reference to the eighth aspect, in some implementations of the eighth aspect, the second relationship includes a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

With reference to the eighth aspect, in some implementations of the eighth aspect, the transceiver unit is further configured to receive first request information, where the first request information is for requesting first ephemeris information, the first ephemeris information is associated with a location of the network device in a first ECI coordinate system at the first time, and there is a first relationship between the first ECI coordinate system and the ECEF coordinate system at the first time. The processing unit is configured to determine that the second ephemeris information is valid.

With reference to the eighth aspect, in some implementations of the eighth aspect, the transceiver unit is further configured to receive second request information, where the second request information is for requesting the second relationship.

With reference to the eighth aspect, in some implementations of the eighth aspect, the transceiver unit is further configured to send fourth indication information, where the fourth indication information indicates that the third indication information is response information of the first request information.

With reference to the eighth aspect, in some implementations of the eighth aspect, the transceiver unit is further configured to send fourth indication information, where the fourth indication information indicates that the third indication information is response information of the second request information.

With reference to the eighth aspect, in some implementations of the eighth aspect, the second request information is carried in radio resource control signaling, a media access control control element, or uplink control information.

According to a ninth aspect, a communication apparatus is provided. The apparatus includes a processor. The processor is coupled to a memory, and may be configured to execute instructions in the memory, to implement the method according to any one of the first aspect to the fourth aspect and any possible implementation of the first aspect to the fourth aspect. Optionally, the apparatus further includes a memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a terminal device or a network device, or a chip configured in the terminal device or the network device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit separately serves as the input circuit and the output circuit at different moments. Specific implementations of the processor and the various circuits are not limited in embodiments of this application.

According to a tenth aspect, a communication apparatus is provided. The apparatus includes a logic circuit and an input/output interface, and the logic circuit is configured to be coupled to the input/output interface, and transmit data through the input/output interface, to perform the method according to any one of the first aspect to the fourth aspect and any possible implementation of the first aspect to the fourth aspect.

According to an eleventh aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and any possible implementation of the first aspect to the fourth aspect.

According to a twelfth aspect, a computer program product is provided. The computer program product includes a computer program (which may also be referred to as code or instructions). When the computer program is run, a computer is enabled to perform the method according to any one of the first aspect to the fourth aspect and any possible implementation of the first aspect to the fourth aspect.

For specific beneficial effects brought by the fifth aspect to the twelfth aspect, refer to the descriptions of the beneficial effects in the first aspect to the fourth aspect. Details are not described herein again.

### BRIEF DESCRIPTION OF DRAWINGS

FIG. 1 is a diagram of a network architecture according to an embodiment of this application;
FIG. 2 is a diagram of an ECI coordinate system according to an embodiment of this application;
FIG. 3 is an interaction flowchart of a distance determining method according to an embodiment of this application;
FIG. 4 is an interaction flowchart of another distance determining method according to an embodiment of this application;
FIG. 5 is a diagram of a communication apparatus according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of still another communication apparatus according to an embodiment of this application.

### DESCRIPTION OF EMBODIMENTS

The following describes technical solutions of embodiments in this application with reference to accompanying drawings.

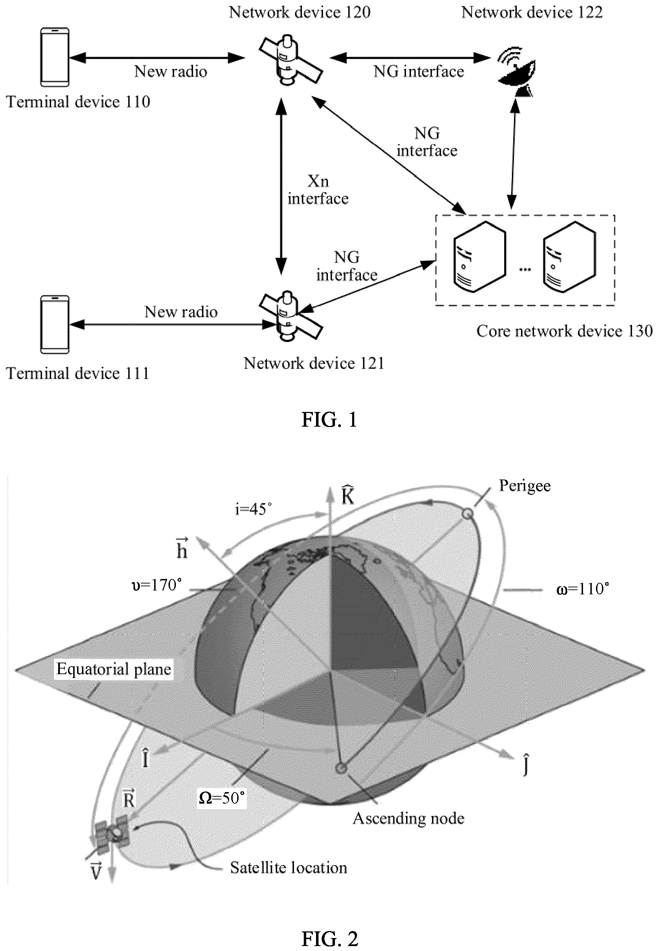

FIG. 1 is a diagram of a network architecture according to an embodiment of this application.

The network architecture obtained through convergence of a satellite communication system and 5G shown in FIG. 1 as an example includes at least one terminal device such as a terminal device 110 and a terminal device 111, at least one network device such as a network device 120, a network device 121, and a network device 122, and a core network device 130. The network device may be a satellite or a gateway (gateway), and is configured to provide a communication service for the terminal device. The gateway may also be referred to as a terrestrial station, a gateway station, or the like. A link between the satellite and the terminal device is referred to as a service link (service link), and a link between the satellite and the gateway is a feeder link (feeder link).

In a 5G communication system, a terrestrial terminal device accesses a network through 5G new radio, and a 5G network device is deployed on a satellite and connected to a terrestrial core network device through a radio link. In addition, there is a radio link between satellites to compete signaling exchange and user data communication between network devices. Network nodes and interfaces between the network nodes in FIG. 1 are described below.

The terminal device in embodiments of this application may also be referred to as a terminal, an access terminal, a user equipment, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but is used to implement a powerful function through software support, data exchange, and cloud interaction. In a broad sense, intelligent wearable devices include full-featured and large-size devices that can implement all or some functions without depending on smartphones, for example, smart watches or smart glasses, and devices that focuses on only one type of application and need to be used together with other devices such as smartphones, for example, various smart bands and smart jewelry for monitoring physical signs.

The network device in embodiments of this application may be any communication device that is configured to communicate with the user equipment and has a wireless transceiver function, may be a network device deployed on a satellite, or may be a network device deployed on the ground. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved base station (home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G system such as an NR system, may be one antenna panel or a group (including a plurality of antenna panels) of antenna panels of a base station in a 5G system, or may be a network node, such as a baseband unit (BBU) or a distributed unit (distributed unit, DU), that constitutes a gNB or a transmission point. In some deployments, the gNB may include a central unit (central unit, CU) and a DU.

The core network device 130 is configured to provide services such as user access control, mobility management, session management, user security authentication, and charging. The core network includes a plurality of functional units, which may be classified into control-plane functional entities and data-plane functional entities. The functional entities are not shown in FIG. 1.

The new radio is a radio link between a terminal device and a network device.

An Xn interface is an interface between network devices and is used for signaling exchange such as handover.

An NG interface is an interface between the network device and the core network device to exchange signaling such as NAS signaling of a core network and user service data.

In 6G and future communication systems, the foregoing device may still use a name of the device in the 5G communication system, or may have another name. This is not limited in embodiments of this application. Functions of the foregoing devices may be completed by one independent device, or may be completed by several devices together. During actual deployment, network elements in the core network may be deployed on a same physical device or different physical devices. This is not limited in embodiments of this application. FIG. 1 is merely an example, and does not constitute any limitation on the protection scope of this application. A communication method provided in embodiments of this application may further relate to a network element or a device that is not shown in FIG. 1. Certainly, the communication method provided in embodiments of this application may alternatively include only some devices shown in FIG. 1. This is not limited in embodiments of this application.

The foregoing network architectures used in embodiments of this application are merely examples, and a network architecture used in embodiments of this application is not limited thereto. Any network architecture that can implement functions of the foregoing devices is applicable to embodiments of this application.

The technical solutions in embodiments of this application may be applied to various communication systems, for example, a non-terrestrial network (non-terrestrial network, NTN) system such as a satellite communication system, a high altitude platform station (high altitude platform station, HAPS) communication system, or an unmanned aerial vehicle, an integrated communication and navigation (integrated communication and navigation, IcaN) system, a global navigation satellite system (global navigation satellite system, GNSS), and an ultra-dense low-orbit satellite communication system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5^{th} generation (5^{th} generation, 5G) system or an evolved communication system after 5G, vehicle-to-everything (vehicle-to-everything, V2X), long term evolution-vehicle (long term evolution-vehicle, LTE-V), internet of vehicles, machine type communication (machine type communication, MTC), internet of things (Internet of things, IoT), long term evolution-machine (long term evolution-machine, LTE-M), machine to machine (machine to machine, M2M), and the like, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The satellite communication system includes a transparent transmission satellite architecture and a non-transparent transmission satellite architecture. Transparent transmission is also referred to as bent-pipe forwarding transmission. To be specific, only processes such as frequency conversion and signal amplification are performed on a signal on a satellite, and the satellite is transparent to the signal. Non-transparent transmission is also referred to as regenerative (on-satellite access/processing) transmission.

When the satellite works in a transparent (transparent) mode, the satellite has a relay and forwarding function. The gateway has functions of a base station or some functions of a base station. Optionally, the gateway may be considered as a terrestrial base station. Alternatively, a terrestrial base station and the gateway may be deployed separately.

When the satellite works in a regenerative (regenerative) mode, the satellite has a data processing capability, and functions of a base station or some functions of a base station, and the satellite may be considered as a base station.

The satellite may perform wireless communication with the terminal device via a broadcast communication signal, a navigation signal, and the like. The satellite may perform wireless communication with a ground station device. The satellite mentioned in embodiments of this application may be a satellite base station, may include an orbit receiver or a repeater configured to forward information, or may be a network side device mounted on the satellite.

The satellite communication system includes a transparent transmission satellite architecture and a non-transparent transmission satellite architecture. Transparent transmission is also referred to as bent-pipe forwarding transmission. To be specific, only processes such as frequency conversion and signal amplification are performed on a signal on a satellite, and the satellite is transparent to the signal as if the satellite does not exist. Non-transparent transmission is also referred to as regenerative (on-satellite access/processing) transmission. To be specific, the satellite has some or all of functions of a base station.

As described above, in the satellite communication system, to complete time/frequency synchronization with a network, the terminal device needs to obtain a frequency offset and a time offset. Therefore, the terminal device needs to determine a distance between the terminal device and the satellite.

In a possible implementation, the network device indicates ephemeris information of the network device via a system information block (system information block, SIB) or dedicated signaling (dedicated signaling), and the ephemeris information is described by using an orbit parameter.

For example, the network device may be a satellite, and the ephemeris information indicated by the network device is a parameter in an earth centered inertial (earth centered inertial, ECI) coordinate system. For ECI coordinates, common coordinate axes include J2000 and M50. This is not limited in this application.

Optionally, when the network device explicitly indicates epoch time (epoch time) via the SIB, epoch time (epoch time) of assistance information (for example, ephemeris information and a common timing advance (timing advance, TA) parameter of a serving satellite) is a start moment of a downlink subframe, and the subframe is indicated via a system frame number (system frame number, SFN) and a subframe number that are indicated together with the assistance information.

Optionally, when the network device implicitly indicates epoch time via the SIB, epoch time of assistance information (for example, ephemeris information and a TA parameter of a serving satellite) is, by default, an end moment of a system information (system information, SI) window including NTN-specific SIB transmission.

Optionally, when the network device indicates epoch time via the dedicated signaling, epoch time of assistance information (for example, ephemeris information and a TA parameter of a serving satellite) is a start moment of a downlink subframe, and the subframe is indicated via an SFN and a subframe number.

For example, the orbit parameter includes parameters shown in Table 1. With reference to FIG. 2, the terminal device may determine a satellite orbit feature based on first five dimensional parameters, and may obtain a specific location of the satellite based on a 6^{th} dimensional parameter.

**Table 1**

| | |
|---|---|
| a | Semi major axis (semi major axis), which can determine an orbital size |
| e | Eccentricity (eccentricity), which can determine an orbital shape |
| 1 | Inclination (inclination), which is a tilt angle of an orbital plane |
| Ω | Right ascension of the ascending node (right ascension of the ascending node), which indicates rotation of an orbital plane |
| ω | Argument of perigee (argument of perigee), which can determine a perigee location |
| M₀/µ/u | Mean anomaly (mean anomaly)/True anomaly (true anomaly)/Argument of latitude (argument of latitude), which can determine a location of a satellite on an orbit |

Six dimensional parameters in Table 1 are representations based on the ECI coordinate system. In FIG. 2, *Î, K̂*, and *Ĵ* represent three coordinate axes of the ECI coordinate system, *̅V̅*̅ represents a relative speed, and *̅R̅*̅ represents a relative distance. The terminal device may determine a current location and a current speed of a satellite based on the six dimensional parameters. In this case, a location and a speed of the satellite at a subsequent moment may be inferred based on a disturbance condition. Factors that may be specifically included in the disturbance condition, for example, atmospheric resistance inhomogeneity, solar wind inhomogeneity, lunar gravitational force inhomogeneity, earth gravitational force inhomogeneity, or the like may depend on complexity of modeling of a physical constraint condition.

In an ideal condition, the terminal device may determine an average angular velocity of the satellite on an equivalent circular orbit based on the six dimensional parameters, that is, determine a phase of the satellite on the equivalent circular orbit at any subsequent moment, and then convert the phase into a phase (location) and a speed that correspond to an actual elliptical orbit (with disturbance).

It should be understood that location information of the terminal device obtained by the terminal device through a global navigation satellite system (global navigation satellite system, GNSS) or a global positioning system (global positioning system, GPS) is coordinate information in an earth centered earth fixed (earth centered earth fixed, ECEF) coordinate system. Therefore, if the terminal device needs to calculate a distance between the terminal device and the satellite, the terminal device needs to know coordinates of the satellite in the ECEF coordinate system. Therefore, the terminal device needs to convert the ephemeris information indicated by the network device into information in the ECEF coordinate system at identical time.

In the foregoing solution, when the network device indicates the ephemeris information, epoch time (epoch time) that is indicated by the network device and that corresponds to the ephemeris information is relative time, and does not relate to transmission time of the ephemeris information during actual transmission. However, when performing conversion between ECI coordinates and ECEF coordinates for the ephemeris information, the terminal device needs to know absolute time corresponding to the ephemeris information, to determine a relationship between a coordinate axis direction of the ECI coordinate system at the epoch time and a coordinate axis direction of the ECEF coordinate system at this time, thereby completing the conversion between the ECI coordinates and the ECEF coordinates for the ephemeris information.

In a possible implementation, in an NR NTN scenario, the terminal device has a GNSS capability, to be specific, the terminal device includes a GNSS module, and may have a capability of obtaining GNSS satellite time provision, to obtain absolute time.

The satellite has a high-precision atomic clock, and the time is usually of high precision. However, different terminal devices are limited by costs, power consumption, sizes, design and manufacturing technologies, and the like. Therefore, receiving and decoding capabilities of GNSS modules in the terminal devices, and internal clock holding capabilities of the terminal devices are different. Therefore, after the terminal device is manufactured, an upper precision limit of the absolute time that can be obtained by the terminal device in a normal operating state is determined by a design and manufacturing standard. For example, a precision capability for the absolute time may reach a second level, a millisecond level, a microsecond level, a picosecond level, a nanosecond level, or the like. Generally, precision of absolute time that can be obtained by a commercial terminal device is limited, and precision in conversion that is between the ECI coordinates and the ECEF coordinates and that is performed by the terminal device for the ephemeris information cannot be ensured.

In another possible implementation, in a wireless network, the terminal device may obtain, via SIB9, universal time coordinated (universal time coordinated, UTC), namely, absolute time.

However, a time granularity indicated by the SIB9 is 10 ms, which is determined by a quantity of bits used by the SIB9 to indicate UTC time, and there is a quantization error. Consequently, an error is introduced in a process in which the terminal device performs conversion between the ECI coordinates and the ECEF coordinates for the ephemeris information. In addition, if a deviation of a clock of the wireless network is considered, an absolute time deviation of the SIB9 is further amplified.

In the foregoing implementation, there is a deviation when the terminal device determines the absolute time. Consequently, there is an error in the following case in which the ephemeris information is used (for example, used for time/frequency synchronization).

For example, when an absolute time deviation of the satellite at an orbit parameter is in an order of magnitude shown in Table 2, a location error of the satellite is shown in Table 2 below.

**Table 2**

| | | | | | | | |
|---|---|---|---|---|---|---|---|
| Absolute time deviation (s) | 20e-9 | 30e-9 | 20e-6 | 100e-6 | 1e-3 | 1 | 10 |
| Location error (km) | 0 | 0 | 0 | 0.0410 | 0.5118 | 508.85 | 5088.52 |

It can be learned that there is an inevitable error in a manner of obtaining the absolute time to perform conversion between the ECI coordinates and the ECEF coordinates, and it is difficult to accurately determine the distance between the satellite and the terminal device.

In view of this, this application provides a distance determining method, so that a terminal device can perform conversion between ECI coordinates and ECEF coordinates for ephemeris information based on a relationship between an ECI coordinate system and an ECEF coordinate system at identical time. In this process, there is no need to obtain absolute time, and therefore, an error in determining a distance between the terminal device and a network device can be reduced.

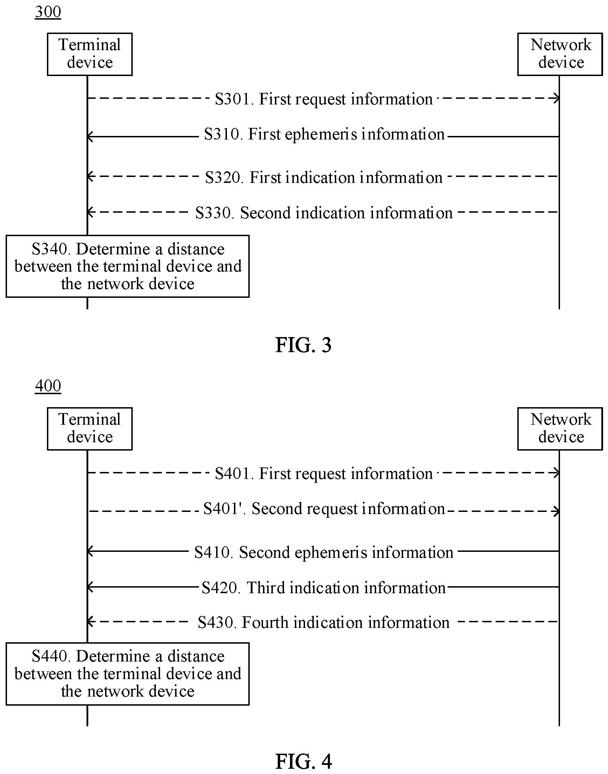

FIG. 3 is an interaction flowchart of a distance determining method according to an embodiment of this application. The method 300 shown in FIG. 3 includes the following step:

S310. A network device sends first ephemeris information to a terminal device, where the first ephemeris information is associated with a location of the network device in a first ECI coordinate system at first time, and there is a first relationship between the first ECI coordinate system and an ECEF coordinate system at the first time. Correspondingly, the terminal device receives the first ephemeris information.

For example, the network device may be a satellite. The first ephemeris information may be carried in radio resource control (radio resource control, RRC) signaling, media access control control element (media access control control element, MAC CE) signaling, or downlink control information (downlink control information, DCI). Alternatively, the first ephemeris information may be carried in dedicated signaling. The dedicated signaling may be signaling for a terminal device or a type of terminal devices. This is not limited in this application.

In a possible implementation, the first relationship includes a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

For example, the first relationship may be predefined, or may be preconfigured on two ends, namely, the network device and the terminal device, or the first relationship may be indicated to the terminal device via the RRC signaling, the MAC CE signaling, or the DCI. This is not limited in this application. Specifically, the first ECI coordinate system is different from an ECI coordinate system (namely, a second ECI coordinate system below) corresponding to delivered ephemeris information in an existing solution. It is assumed that, coordinate axes of the first ECI coordinate system include an X1 axis, a Y1 axis, and a Z1 axis, coordinate axes of the ECI coordinate system in the existing solution include an X2 axis, a Y2 axis, and a Z2 axis, and coordinate axes of the ECEF coordinate system include an X3 axis, a Y3 axis, and a Z3 axis. In this case, a first angle between the X3 axis and the X1 axis is θ1, a second angle between the Y3 axis and the Y1 axis is β1, and a third angle between the Z3 axis and the Z1 axis is γ1; and an angle between the X2 axis and the X1 axis is A, an angle between the Y2 axis and the Y1 axis is B, and an angle between the Z2 axis and the Z1 axis is C. Values of θ1, β1, and γ1 may be predefined, preconfigured, or indicated via signaling. The values of θ1, β1, and γ1 are in a range of [-π, π] or [-180°, 180°], or equivalent [0, 2π] or [0, 360°]. This is not limited in this application. The first ephemeris information is location information that is of the network device at the first time and that is obtained based on the first ECI coordinate system. Before determining the first ephemeris information, the network device may process the second ECI coordinate system into the first ECI coordinate system based on the angles A, B, and C.

In a possible implementation, the first angle is 0 degrees, the second angle is 0 degrees, and the third angle is 0 degrees.

For example, values of θ1, β1, and γ1 are 0. Alternatively, θ1, β1, and γ1 may have other values. This is not limited in this application.

Optionally, the method 300 further includes the following step:
S301. The terminal device sends first request information to the network device, where the first request information is for requesting the first ephemeris information. Correspondingly, the network device receives the first request information.

For example, the first request information may be carried in RRC signaling, MAC CE signaling, or uplink control information (uplink control information, UCI), or the first request information may alternatively be carried in other uplink information. This is not limited in this application.

Optionally, the method 300 further includes the following step:
S320. The network device sends first indication information to the terminal device, where the first indication information indicates that the first ephemeris information is response information of the first request information. Correspondingly, the terminal device receives the first indication information.

For example, the first indication information and the first ephemeris information may be carried in a same message, or the first indication information and the first ephemeris information may be carried in different messages. This is not limited in this application. Alternatively, the network device and the terminal device may agree that ephemeris information sent via the dedicated signaling is ephemeris information in response to the first request information.

Optionally, the method 300 further includes the following steps.

S330. The network device sends second indication information to the terminal device, where the second indication information indicates the first relationship. Correspondingly, the terminal device receives the second indication information.

For example, the second indication information may be carried in RRC signaling, MAC CE signaling, or DCI, or the second indication information may alternatively be carried in other downlink information. The second indication information, the first indication information, and the first ephemeris information may be carried in a same message or may be carried in different messages, or two of the second indication information, the first indication information, and the first ephemeris information may be carried in a same message. This is not limited in this application.

S340. The terminal device determines a distance between the terminal device and the network device based on the first ephemeris information and the first relationship.

For example, the first ephemeris information includes ECI coordinate information associated with the first ECI coordinate system. The terminal device may obtain ECEF coordinate information of a location of the terminal device, convert the ECI coordinate information into ECEF coordinate information based on the first angle, the second angle, and the third angle, and determine the distance between the terminal device and the network device based on the ECEF coordinate information of the terminal device and ECEF coordinate information of the network device.

Alternatively, the terminal device obtains ECEF coordinate information of a location of the terminal device, converts the ECEF coordinate information into ECI coordinate information based on the first angle, the second angle, and the third angle, and determines the distance between the terminal device and the network device based on the ECI coordinate information of the terminal device and ECI coordinate information of the network device.

In the method 300, after obtaining the first ephemeris information and the first relationship, the terminal device may perform coordinate information conversion based on the first relationship. In this way, subsequently, the terminal device may calculate the distance between the terminal device and the network device based on coordinate information obtained through conversion, and deduce a movement trajectory of the network device in subsequent time, to calculate a distance and a speed of the network device relative to the terminal device in the subsequent time, thereby determining a frequency offset and a time offset during communication between the terminal device and the network device, for time/frequency synchronization.

In the method 300, when the distance between the terminal device and the network device is determined, absolute time corresponding to ephemeris information may not be required to complete conversion between ECI coordinate information and ECEF coordinate information. This can improve accuracy of the conversion between the ECI coordinate information and the ECEF coordinate information. In addition, in a process of performing the method 300, if the first ephemeris information expires (or becomes invalid), different θ1, β1, and γ1 may be set again. Therefore, the method is flexible.

FIG. 4 is an interaction flowchart of another distance determining method according to an embodiment of this application. The method 400 shown in FIG. 4 includes the following steps.

S410. A network device sends second ephemeris information to a terminal device, where the second ephemeris information is associated with a location of the network device in a second ECI coordinate system at first time. Correspondingly, the terminal device receives the second ephemeris information.

For example, the network device may be a satellite. The second ephemeris information may be carried in RRC signaling, MAC CE signaling, or DCI. Alternatively, the second ephemeris information may be carried in dedicated signaling. The dedicated signaling may be signaling for a terminal device or a type of terminal devices. This is not limited in this application.

S420. The network device sends third indication information to the terminal device, where the third indication information indicates a second relationship between the second ECI coordinate system and an earth centered earth fixed ECEF coordinate system at the first time. Correspondingly, the terminal device receives the third indication information.

For example, the third indication information may be carried in RRC signaling, MAC CE signaling, or DCI, or the third indication information may be carried in other downlink information. The third indication information and the second ephemeris information may be carried in a same message, or the third indication information and the second ephemeris information may be carried in different messages. This is not limited in this application.

In a possible implementation, the second relationship includes a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

For example, the second relationship may alternatively be predefined, or may be preconfigured on two ends, namely, the network device and the terminal device. This is not limited in this application. If the second relationship is predefined or is preconfigured on the network device and the terminal device, S420 may not be required.

Specifically, the second ECI coordinate system is an ECI coordinate system corresponding to delivered ephemeris information in an existing solution. It is assumed that coordinate axes of the second ECI coordinate system include an X2 axis, a Y2 axis, and a Z2 axis, and coordinate axes of the ECEF coordinate system include an X3 axis, a Y3 axis, and a Z3 axis. In this case, the fourth angle between the X3 axis and the X2 axis is θ2, the fifth angle between the Y3 axis and the Y2 axis is β2, and the sixth angle between the Z3 axis and the Z2 axis is γ2. θ2, β2, and γ2 may be determined based on the second ECI coordinate system and the ECEF coordinate system at the first time. Values of θ2, β2, and γ2 may be predefined, preconfigured, or indicated via signaling. The values of θ2, β2, and γ2 are in a range of [-π, π] or [-180°, 180°], or equivalent [0, 2π] or [0, 360°]. This is not limited in this application. The second ephemeris information is location information that is of the network device at the first time and that is obtained based on the second ECI coordinate system.

Optionally, the method 400 further includes the following step:
S401. The terminal device sends first request information to the network device, where the first request information is for requesting first ephemeris information, the first ephemeris information is associated with a location of the network device in a first ECI coordinate system at the first time, and there is a first relationship between the first ECI coordinate system and the ECEF coordinate system at the first time. Correspondingly, the network device receives the first request information.

Specifically, for content of the first ephemeris information, the first relationship, and the first ECI coordinate system, refer to the descriptions in the method 300. Details are not described herein again.

For example, the first request information may be carried in RRC signaling, MAC CE signaling, or UCI, or the first request information may be alternatively carried in other uplink information. This is not limited in this application.

Optionally, the network device determines that the second ephemeris information is valid.

It should be understood that, after receiving the first request information, if the network device determines that the second ephemeris information has not expired (for example, duration from epoch time of the second ephemeris information to time at which the network device responds to the first request message does not exceed NTN valid duration defined in a cell, where the NTN valid duration may be defined and indicated to the terminal device in the cell), and the second ephemeris information is still valid, the network device may send the third indication information as the response to the first request information, and does not need to send the first ephemeris information to the terminal device. This can reduce overheads. After receiving the first request information, if the network device determines that the second ephemeris information has expired, the network device may send the first ephemeris information as a response to the first request information. For details, refer to the descriptions in the method 300. Details are not described herein again.

Alternatively, in S401', the terminal device sends second request information to the network device, where the second request information is for requesting the second relationship. Correspondingly, the network device receives the second request information.

For example, the second request information may be carried in RRC signaling, MAC CE signaling, or UCI, or the second request information may be alternatively carried in other uplink information. This is not limited in this application.

It should be understood that if the terminal device determines that the second ephemeris information has not expired, the terminal device may send the second request information to the network device. The second request information may implicitly indicate that the second ephemeris information has not expired. In this way, after receiving the second request information, the network device may directly send the third indication information to the terminal device.

It should be understood that S401' and S401 are two different solutions, and either of S401' and S401 may be selected for implementation.

Optionally, the method 400 further includes the following step:
S430. The network device sends fourth indication information to the terminal device, where the fourth indication information indicates that the third indication information is response information of the first request information or the second request information. Correspondingly, the terminal device receives the fourth indication information.

For example, the fourth indication information may be carried in RRC signaling, MAC CE signaling, or DCI, or the fourth indication information may be alternatively carried in other downlink information. The fourth indication information, the second ephemeris information, and the third indication information may be carried in a same message or may be carried in different messages, or two of the fourth indication information, the second ephemeris information, and the third indication information may be carried in a same message. This is not limited in this application. Alternatively, the network device and the terminal device may agree that the third indication information sent via the dedicated signaling is the response information of the first request information or the second request information.

S440. The terminal device determines a distance between the terminal device and the network device based on the second ephemeris information and the second relationship.

For example, the second ephemeris information includes ECI coordinate information associated with the second ECI coordinate system. The terminal device may obtain ECEF coordinate information of a location of the terminal device, convert the ECI coordinate information into ECEF coordinate information based on the fourth angle, the fifth angle, and the sixth angle, and determine the distance between the terminal device and the network device based on the ECEF coordinate information of the terminal device and ECEF coordinate information of the network device.

Alternatively, the terminal device obtains ECEF coordinate information of a location of the terminal device, converts the ECEF coordinate information into ECI coordinate information based on the fourth angle, the fifth angle, and the sixth angle, and determines the distance between the terminal device and the network device based on the ECI coordinate information of the terminal device and ECI coordinate information of the network device.

In the method 400, after obtaining the second ephemeris information and the second relationship, the terminal device may perform coordinate information conversion based on the second relationship. In this way, subsequently, the terminal device may calculate the distance between the terminal device and the network device based on coordinate information obtained through conversion, and deduce a movement trajectory of the network device in subsequent time, to calculate a distance and a speed of the network device relative to the terminal device in the subsequent time, thereby determining a frequency offset and a time offset during communication between the terminal device and the network device, for time/frequency synchronization.

In the method 400, when the distance between the terminal device and the network device is determined, absolute time corresponding to ephemeris information may not be required to complete conversion between ECI coordinate information and ECEF coordinate information. This can improve accuracy of the conversion between the ECI coordinate information and the ECEF coordinate information. In addition, in a process of performing the method 400, existing ephemeris information may be reused, and the ephemeris information may not need to be carried in response information of a request from the terminal device, so that overheads of terminal device-specific signaling and overall signaling of the communication system can be reduced.

The dashed-line steps in the foregoing flowcharts are optional steps, and a sequence of the steps is determined based on internal logic of the method. The sequence numbers shown in the foregoing flowcharts are merely examples, and do not limit a sequence of the steps in this application.

It should be further understood that the methods provided in embodiments of this application may be used separately, or may be used in combination. This is not limited in this application. Various implementations provided in embodiments of this application may be used separately, or may be used in combination. This is not limited in this application.

It should be understood that the term "and/or" in this application describes only an association relationship between associated objects and represents that three relationships may exist. For example, "A and/or B" may represent the following three cases: Both A and B exist, only A exists, and only B exists, where A and B may be singular or plural. In addition, the character "/" in this specification usually indicates an "or" relationship between the associated objects, or may indicate an "and/or" relationship. For details, refer to the context for understanding.

In this application, "at least one item (piece)" means one or more items (pieces), and "at least two items (pieces)" and "a plurality of items (pieces)" mean two or more items (pieces). "At least one of the following items (pieces)" or a similar expression thereof means any combination of these items, including any combination of singular items (pieces) or plural items (pieces). For example, at least one of a, b, or c may represent: a, b, c, a and b, a and c, b and c, or a, b, and c, where a, b, and c may be singular or plural.

It should be noted that, an execution entity shown in FIG. 3 or FIG. 4 is merely an example, and the execution entity may alternatively be a chip, a chip system, or a processor that supports the execution entity in implementing the method shown in FIG. 3 or FIG. 4. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that in the foregoing method embodiments, methods and operations implemented by the terminal device may alternatively be implemented by a component (for example, a chip or a circuit) in the terminal device, and methods and operations implemented by the network device may alternatively be implemented by a component (for example, a chip or a circuit) in the network device.

The foregoing mainly describes the solutions provided in embodiments of this application from a perspective of interaction between network elements. It may be understood that, to implement the foregoing functions, each network element such as a transmit-end device or a receive-end device includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmit-end device or a receive-end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

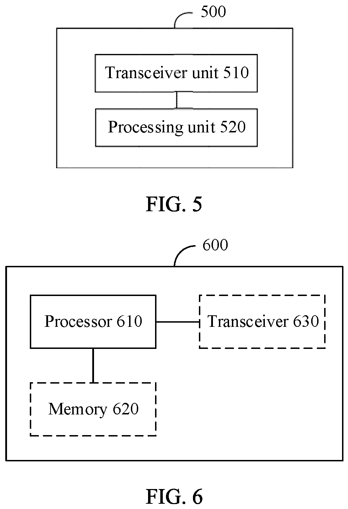

FIG. 5 is a block diagram of a communication apparatus according to an embodiment of this application. A communication apparatus 500 shown in FIG. 5 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

Optionally, the transceiver unit 510 may include a sending unit and a receiving unit. The sending unit is configured to perform a sending operation in the foregoing method embodiments. The receiving unit is configured to perform a receiving operation in the foregoing method embodiments.

It should be noted that the communication apparatus 500 may include the sending unit, but does not include the receiving unit. Alternatively, the communication apparatus 500 may include the receiving unit, but does not include the sending unit, specifically depending on whether the foregoing solution performed by the communication apparatus 500 includes sending actions and receiving actions.

Optionally, the communication apparatus 500 may further include a storage unit. The storage unit may be configured to store instructions and/or data. The processing unit 520 may read the instructions and/or the data in the storage unit.

In a design, the communication apparatus 500 may be configured to perform actions performed by the terminal device in the foregoing method embodiments.

Optionally, the communication apparatus 500 may be a terminal device, the transceiver unit 510 is configured to perform a receiving or sending operation by the terminal device in the foregoing method embodiments, and the processing unit 520 is configured to perform an internal processing operation by the terminal device in the foregoing method embodiments.

Optionally, the communication apparatus 500 may be a device including the terminal device. Alternatively, the communication apparatus 500 may be a component configured in the terminal device, for example, a chip in the terminal device. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to receive first ephemeris information, where the first ephemeris information is associated with a location of a network device in a first earth centered inertial ECI coordinate system at first time, and there is a first relationship between the first ECI coordinate system and an earth centered earth fixed ECEF coordinate system at the first time. The processing unit 520 is configured to determine a distance between the terminal device and the network device based on the first ephemeris information and the first relationship.

In a possible implementation, the transceiver unit 510 is further configured to send first request information, where the first request information is for requesting the first ephemeris information.

In a possible implementation, the transceiver unit 510 is further configured to receive first indication information, where the first indication information indicates that the first ephemeris information is response information of the first request information.

In a possible implementation, the transceiver unit 510 is further configured to receive second indication information, where the second indication information indicates the first relationship.

In a possible implementation, the transceiver unit 510 is configured to receive second ephemeris information, where the second ephemeris information is associated with a location of a network device in a second earth centered inertial ECI coordinate system at first time. The transceiver unit 510 is further configured to receive third indication information, where the third indication information indicates a second relationship between the second ECI coordinate system and an earth centered earth fixed ECEF coordinate system at the first time. The processing unit 520 is configured to determine a distance between the terminal device and the network device based on the second ephemeris information and the second relationship.

In a possible implementation, the transceiver unit 510 is further configured to send first request information, where the first request information is for requesting first ephemeris information, the first ephemeris information is associated with a location of the network device in a first ECI coordinate system at the first time, and there is a first relationship between the first ECI coordinate system and the ECEF coordinate system at the first time.

In a possible implementation, the transceiver unit 510 is further configured to send second request information, where the second request information is for requesting the second relationship.

In a possible implementation, the transceiver unit 510 is further configured to receive fourth indication information, where the fourth indication information indicates that the third indication information is response information of the first request information or the second request information.

In another design, the communication apparatus 500 shown in FIG. 5 may be configured to perform actions performed by the network device in the foregoing method embodiments.

Optionally, the communication apparatus 500 may be a network device, the transceiver unit 510 is configured to perform a receiving or sending operation by the network device in the foregoing method embodiments, and the processing unit 520 is configured to perform an internal processing operation by the network device in the foregoing method embodiments.

Optionally, the communication apparatus 500 may be a device including the network device. Alternatively, the communication apparatus 500 may be a component configured in the network device, for example, a chip in the network device. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to send first ephemeris information, where the first ephemeris information is associated with a location of a network device in a first earth centered inertial ECI coordinate system at first time, and there is a first relationship between the first ECI coordinate system and an earth centered earth fixed ECEF coordinate system at the first time.

In a possible implementation, the transceiver unit 510 is further configured to receive first request information, where the first request information is for requesting the first ephemeris information.

In a possible implementation, the transceiver unit 510 is further configured to send first indication information, where the first indication information indicates that the first ephemeris information is response information of the first request information.

In a possible implementation, the transceiver unit 510 is further configured to send second indication information, where the second indication information indicates the first relationship.

In a possible implementation, the transceiver unit 510 is configured to send second ephemeris information, where the second ephemeris information is associated with a location of a network device in a second earth centered inertial ECI coordinate system at first time. The transceiver unit 510 is further configured to send third indication information, where the third indication information indicates a second relationship between the second ECI coordinate system and an earth centered earth fixed ECEF coordinate system at the first time.

In a possible implementation, the transceiver unit 510 is further configured to receive first request information, where the first request information is for requesting first ephemeris information, the first ephemeris information is associated with a location of the network device in a first ECI coordinate system at the first time, and there is a first relationship between the first ECI coordinate system and the ECEF coordinate system at the first time. The processing unit 520 is configured to determine that the second ephemeris information is valid.

In a possible implementation, the transceiver unit 510 is further configured to receive second request information, where the second request information is for requesting the second relationship.

In a possible implementation, the transceiver unit 510 is further configured to send fourth indication information, where the fourth indication information indicates that the third indication information is response information of the first request information or the second request information.

As shown in FIG. 6, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the methods in the foregoing method embodiments are performed.

Optionally, the communication apparatus 600 includes one or more processors 610.

Optionally, as shown in FIG. 6, the communication apparatus 600 may further include the memory 620.

Optionally, the communication apparatus 600 may include one or more memories 620.

Optionally, the memory 620 and the processor 610 may be integrated, or separately disposed.

Optionally, as shown in FIG. 6, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal.

Optionally, a component that is in the transceiver 630 and that is configured to implement a receiving function may be considered as a receiving module, and a component that is in the transceiver 630 and that is configured to implement a sending function may be considered as a sending module. That is, the transceiver 630 includes a receiver and a transmitter. The transceiver may also be sometimes referred to as a transceiver machine, a transceiver module, a transceiver circuit, or the like. The receiver may also be sometimes referred to as a receiver machine, a receiving module, a receiving circuit, or the like. The transmitter may also be sometimes referred to as a transmitter machine, a transmitter, a transmitting module, a transmitting circuit, or the like.

In a solution, the communication apparatus 600 is configured to implement operations performed by the terminal device in the foregoing method embodiments. For example, the processor 610 is configured to implement operations (for example, operations in S340 and S440) performed inside the terminal device in the foregoing method embodiments, and the transceiver 630 is configured to implement receiving or sending operations (for example, operations in S301, S310, S320, S330, S401, S401', S410, S420, and S430) performed by the terminal device in the foregoing method embodiments.

In a solution, the communication apparatus 600 is configured to implement operations performed by the network device in the foregoing method embodiments. For example, the processor 610 is configured to implement operations performed inside the network device in the foregoing method embodiments, and the transceiver 630 is configured to implement receiving or sending operations (for example, operations in S301, S310, S320, S330, S401, S401', S410, S420, and S430) performed by the network device in the foregoing method embodiments.

An embodiment of this application further provides a communication apparatus 700. The communication apparatus 700 may be a terminal device or a network device, or may be a chip in the terminal device or the network device. The communication apparatus 700 may be configured to perform operations performed by the terminal device or the network device in the foregoing method embodiments.

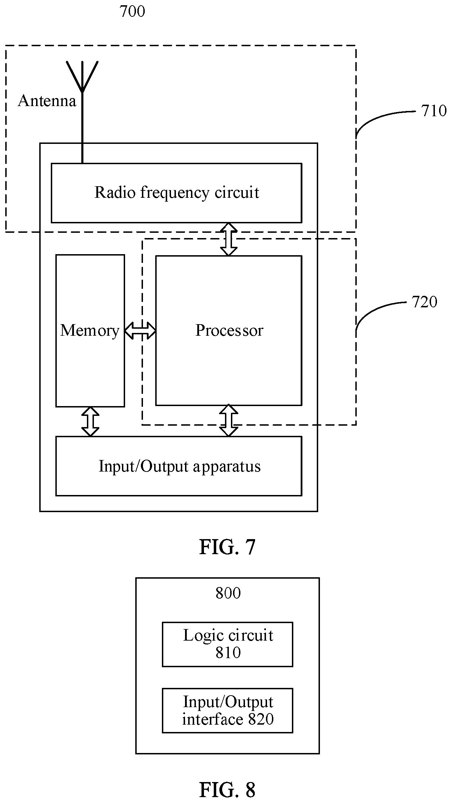

FIG. 7 is a simplified diagram of a structure of a communication apparatus. As shown in FIG. 7, the communication apparatus 700 includes a processor, a memory, a radio frequency circuit, an antenna, and an input/output apparatus. The processor is mainly configured to process a communication protocol and communication data, control the communication apparatus 700, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus 700, the radio frequency circuit receives the radio frequency signal by using the antenna, converts the radio frequency signal into a baseband signal, and outputs the baseband signal to the processor. The processor converts the baseband signal into data and processes the data. For ease of description, FIG. 7 shows only one memory and one processor. In an actual product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the communication apparatus 700, and the processor that has a processing function may be considered as a processing unit of the communication apparatus 700.

As shown in FIG. 7, the communication apparatus 700 includes a transceiver unit 710 and a processing unit 720. The transceiver unit 710 may also be referred to as a transceiver, a transceiver machine, a transceiver apparatus, a transceiver circuit, or the like. The processing unit 720 may also be referred to as a processor, a processing board, a processing module, a processing apparatus, or the like.

Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. The receiving unit may also be sometimes referred to as a receiver machine, a receiver, a receiving apparatus, a receiving circuit, or the like. The sending unit may also be sometimes referred to as a transmitter machine, a transmitter, a transmitting apparatus, a transmitting circuit, or the like.

In an implementation, the processing unit 720 and the transceiver unit 710 are configured to perform an operation on a terminal device side.

For example, the transceiver unit 710 is configured to perform sending and receiving operations in S301, S310, S320, S330, S401, S401', S410, S420, and S430, and the processing unit 720 is configured to perform processing operations in S340 and S440.

In another implementation, the processing unit 720 and the transceiver unit 710 are configured to perform an operation on a network device side.

For example, the transceiver unit 710 is configured to perform sending and receiving operations in S301, S310, S320, S330, S401, S401', S410, S420, and S430.

It should be understood that FIG. 7 is merely an example instead of a limitation. The communication apparatus 700 including the transceiver unit and the processing unit may not depend on the structure shown in FIG. 7.

When the communication apparatus 700 is a chip, the chip includes a transceiver unit and a processing unit. The transceiver unit may be an input/output circuit or a communication interface. The processing unit may be a processor, a microprocessor, or an integrated circuit integrated on the chip.

As shown in FIG. 8, an embodiment of this application further provides a communication apparatus 800. The communication apparatus 800 includes a logic circuit 810 and an input/output interface (input/output interface) 820.

The logic circuit 810 may be a processing circuit in the communication apparatus 800. The logic circuit 810 may be coupled and connected to a storage unit, and invoke instructions in the storage unit, so that the communication apparatus 800 can implement the method and function in embodiments of this application. The input/output interface 820 may be an input/output circuit in the communication apparatus 800, and outputs information processed by the communication apparatus 800, or inputs to-be-processed data or signaling information into the communication apparatus 800 for processing.

In a solution, the communication apparatus 800 is configured to implement operations performed by the terminal device in the foregoing method embodiments.

For example, the logic circuit 810 is configured to implement processing-related operations performed by the terminal device in the foregoing method embodiments, for example, processing operations by the terminal device in S340 and S440. The input/output interface 820 is configured to implement sending and/or receiving-related operations performed by the terminal device in the foregoing method embodiments, for example, sending and receiving operations by the terminal device in S301, S310, S320, S330, S401, S401', S410, S420, and S430. For specific operations performed by the logic circuit 810, refer to the foregoing descriptions of the processing unit 520. For operations performed by the input/output interface 820, refer to the foregoing descriptions of the transceiver unit 510. Details are not described herein again.

In another solution, the communication apparatus 800 is configured to implement operations performed by the network device in the foregoing method embodiments.

For example, the logic circuit 810 is configured to implement processing-related operations performed by the network device in the foregoing method embodiments, for example, the processing-related operations performed by the network device in the method embodiments. The input/output interface 820 is configured to implement sending and/or receiving-related operations performed by the network device in the foregoing method embodiments, for example, sending and receiving operations by the network device in S301, S310, S320, S330, S401, S401', S410, S420, and S430. For specific operations performed by the logic circuit 810, refer to the foregoing descriptions of the processing unit 520. For operations performed by the input/output interface 820, refer to the foregoing descriptions of the transceiver unit 510. Details are not described herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing methods can be implemented by using a hardware integrated logic circuit in the processor, or by using instructions in a form of software. The steps in the methods disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and methods described in this specification includes but is not limited to these and any other memories of appropriate types.

According to the method provided in embodiments of this application, this application further provides a computer-readable medium. The computer-readable medium stores program code. When the program code is run on a computer, the computer is enabled to perform the method shown in the method embodiment. For example, when a computer program is executed by a computer, the computer is enabled to implement the method performed by the terminal device or the method performed by the network device in the foregoing method embodiments.

Embodiments of this application further provide a computer program product including instructions. When the instructions are executed by a computer, the computer is enabled to implement the method performed by the terminal device or the method performed by the network device in the foregoing method embodiments.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The terminal device and the network device in the foregoing apparatus embodiments correspond to the terminal device and the network device in the method embodiments. A corresponding module or unit performs a corresponding step. For example, the communication unit (the transceiver) performs a receiving step or a sending step in the method embodiments, and the processing unit (the processor) may perform a step other than the sending step and the receiving step. For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A distance determining method, comprising:
receiving, by a first communication apparatus, first ephemeris information, wherein the first ephemeris information is associated with a location of a network device in a first earth centered inertial ECI coordinate system at first time, and there is a first relationship between the first ECI coordinate system and an earth centered earth fixed ECEF coordinate system at the first time; and
determining, by the first communication apparatus, a distance between the first communication apparatus and the network device based on the first ephemeris information and the first relationship.

2. The method according to claim 1, wherein the method further comprises:
sending, by the first communication apparatus, first request information, wherein the first request information is for requesting the first ephemeris information.

3. The method according to claim 2, wherein the method further comprises:
receiving, by the first communication apparatus, first indication information, wherein the first indication information indicates that the first ephemeris information is response information of the first request information.

4. The method according to any one of claims 1 to 3, wherein the first relationship comprises a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

5. The method according to any one of claims 1 to 4, wherein the method further comprises:
receiving, by the first communication apparatus, second indication information, wherein the second indication information indicates the first relationship.

6. The method according to claim 4, wherein the first angle is 0 degrees, the second angle is 0 degrees, and the third angle is 0 degrees.

7. The method according to claim 2 or 3, wherein the first request information is carried in radio resource control signaling, media access control control element signaling, or uplink control information.

8. A distance determining method, comprising:
receiving, by a first communication apparatus, second ephemeris information, wherein the second ephemeris information is associated with a location of a network device in a second earth centered inertial ECI coordinate system at first time;
receiving, by the first communication apparatus, third indication information, wherein the third indication information indicates a second relationship between the second ECI coordinate system and an earth centered earth fixed ECEF coordinate system at the first time; and
determining, by the first communication apparatus, a distance between the first communication apparatus and the network device based on the second ephemeris information and the second relationship.

9. The method according to claim 8, wherein the second relationship comprises a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

10. The method according to claim 8 or 9, wherein the method further comprises:
sending, by the first communication apparatus, second request information, wherein the second request information is for requesting the second relationship.

11. The method according to claim 10, wherein the method further comprises:
receiving, by the first communication apparatus, fourth indication information, wherein the fourth indication information indicates that the third indication information is response information of the second request information.

12. The method according to claim 10 or 11, wherein the second request information is carried in radio resource control signaling, a media access control control element, or uplink control information.

13. A distance determining method, comprising:
sending, by a second communication apparatus, first ephemeris information, wherein the first ephemeris information is associated with a location of the second communication apparatus in a first earth centered inertial ECI coordinate system at first time, and there is a first relationship between the first ECI coordinate system and an earth centered earth fixed ECEF coordinate system at the first time.

14. The method according to claim 13, wherein the method further comprises:
receiving, by the second communication apparatus, first request information, wherein the first request information is for requesting the first ephemeris information.

15. The method according to claim 14, wherein the method further comprises:
sending, by the second communication apparatus, first indication information, wherein the first indication information indicates that the first ephemeris information is response information of the first request information.

16. The method according to any one of claims 13 to 15, wherein the first relationship comprises a first angle between a first axis of the first ECI coordinate system and a first axis of the ECEF coordinate system, a second angle between a second axis of the first ECI coordinate system and a second axis of the ECEF coordinate system, and a third angle between a third axis of the first ECI coordinate system and a third axis of the ECEF coordinate system.

17. The method according to any one of claims 13 to 16, wherein the method further comprises:
sending, by the second communication apparatus, second indication information, wherein the second indication information indicates the first relationship.

18. The method according to claim 16, wherein the first angle is 0 degrees, the second angle is 0 degrees, and the third angle is 0 degrees.

19. The method according to claim 14 or 15, wherein the first request information is carried in radio resource control signaling, a media access control control element, or uplink control information.

20. A distance determining method, comprising:
sending, by a second communication apparatus, second ephemeris information, wherein the second ephemeris information is associated with a location of the second communication apparatus in a second earth centered inertial ECI coordinate system at first time; and
sending, by the second communication apparatus, third indication information, wherein the third indication information indicates a second relationship between the second ECI coordinate system and an earth centered earth fixed ECEF coordinate system at the first time.

21. The method according to claim 20, wherein the second relationship comprises a fourth angle between a first axis of the second ECI coordinate system and a first axis of the ECEF coordinate system, a fifth angle between a second axis of the second ECI coordinate system and a second axis of the ECEF coordinate system, and a sixth angle between a third axis of the second ECI coordinate system and a third axis of the ECEF coordinate system.

22. The method according to claim 20 or 21, wherein the method further comprises:
receiving, by the second communication apparatus, second request information, wherein the second request information is for requesting the second relationship.

23. The method according to claim 22, wherein the method further comprises:
sending, by the second communication apparatus, fourth indication information, wherein the fourth indication information indicates that the third indication information is response information of the second request information.

24. The method according to claim 22 or 23, wherein the second request information is carried in radio resource control signaling, a media access control control element, or uplink control information.

25. A communication apparatus, wherein the apparatus comprises a unit configured to perform the method according to any one of claims 1 to 12, or comprises a unit configured to perform the method according to any one of claims 13 to 24.

26. A communication apparatus, wherein the apparatus comprises a processor, the processor is coupled to a memory, and the memory stores instructions; and when the instructions are run by the processor,
the processor is enabled to perform the method according to any one of claims 1 to 12, or
the processor is enabled to perform the method according to any one of claims 13 to 24.

27. A communication apparatus, wherein the apparatus comprises a logic circuit, and the logic circuit is configured to: be coupled to an input/output interface, and transmit data through the input/output interface, to perform the method according to any one of claims 1 to 12, or perform the method according to any one of claims 13 to 24.

28. A computer-readable storage medium, wherein the computer-readable storage medium is configured to store a computer program; and when the computer program is run on a computer, the computer is enabled to perform the method according to any one of claims 1 to 12, or the computer is enabled to perform the method according to any one of claims 13 to 24.

29. A computer program product, wherein the computer program product comprises computer program code; and when the computer program code is run, the method according to any one of claims 1 to 12 is implemented, or the method according to any one of claims 13 to 24 is implemented.

30. A communication system, comprising a terminal device and/or a network device, wherein the terminal device is configured to implement the method according to any one of claims 1 to 12, and the network device is configured to implement the method according to any one of claims 13 to 24.
